# EUROPEAN PATENT APPLICATION

(11) **EP 4 570 447 A1**
(43) Date of publication of application: **18.06.2025**
(21) Application number: 23215886.5
(22) Date of filing: 12.12.2023
(51) Int. Cl.: B25J 9/06, B25J 9/10, B25J 9/14, B25J 18/02, B25J 18/06, B25J 19/00

(54) **SOFT ROBOTIC ACTUATOR AND EVERSION ROBOT SYSTEM**

(71) Applicant: Liberty Global Europe Holding B.V., 1119 PE Schiphol-Rijk (NL)
(72) Inventor: REGEER, Ton, 3223 XD Hellevoetsluis (NL)
(74) Representative: Nederlandsch Octrooibureau

(57) **Abstract**

A soft robotic actuator (1) for use in an eversion robot system (7), comprising a flexible sleeve (2) enclosing a passage (3) extending through the sleeve (2) from an open end (4) thereof, wherein the open end (4) is configured for connection to an air outlet (11) of an eversion robot system (7), and wherein the sleeve (2) further comprises one or more circumferentially wound reinforcement wires (5) extending longitudinally along the sleeve (2).

## Description

### Field of the invention

The present invention relates to a soft robotic actuator which can be utilized as a tool for installing cables and the like in constrained spaces, such as underground ducts. In a further aspect the present invention relates to an eversion robot system using the soft robotic actuator.

### Background art

US patent application US 2019/217908 A1 discloses a robot for navigating an environment through growth is provided. The growing robot has a thin-walled, hollow, pressurized, compliant body that elongates the body by everting from its tip new wall material that is stored inside the body. In an embodiment, a camera is provided at a distal end or tip of the body and held in place by a camera wire running through the body of the robot. Tension on the camera wire keeps the camera stuck at the distal end of the robot, wherein the camera allows for visual feedback of the environment.

Soft robotic actuators of the type described above are useful for navigating and inspecting tight spaces as the growing robot carries a camera at its moving distal end. However, such soft robotic actuators tend to be fragile and prone to rupture or puncture when constrained spaces are to be navigated and inspected. Even though inspection of constrained spaced is valuable, there is a need for soft robotic actuators that offer more versatility, so wherein the soft robotic actuator can be used not only for inspection, but also as a tool for installing or placing objects in constrained spaced.

### Summary of the invention

An object of the present invention is to provide an improved soft robotic actuator that can be utilized as a tool for installing cables and the like in constrained spaces, such as underground ducts. These underground ducts may be obstructed because of duct collapse, accumulated debris, and/or by existing cables extending through the underground duct. The soft robotic actuator exhibits improved strength for reliably navigating constrained spaces whilst avoiding rupture.

According to the present invention, a soft robotic actuator of the type described above is provided, comprising a flexible sleeve enclosing a passage extending through the sleeve from an open end thereof, wherein the open end is configured for connection to an air outlet of an eversion robot system, and wherein the sleeve further comprises one or more circumferentially wound reinforcement wires extending longitudinally along the sleeve.

The one or more circumferentially wound reinforcement wires provide radial strength to the soft robotic actuator when in use. In particular, the one or more reinforcement wires allow for much higher actuator pressures for eversion of the soft robotic actuator whilst avoiding rupture thereof. For example, when an underground duct has severe local constrictions, e.g., due to debris or local duct collapse, it may be necessary to substantially increase actuation pressure and force the soft robotic actuator to negotiate such local constrictions. However, substantially increasing actuation pressure may cause a prior art soft robotic actuator to rupture. Therefore, the one or more circumferentially wound reinforcement wires along the flexible sleeve significantly increases radial strength of the soft robotic actuator when negotiating local constrictions for which higher actuator pressures are necessary.

In a further aspect, an object of the present invention it to provide an improved eversion robot system, i.e., an eversion robot system for moving a soft robotic actuator through a duct. In particular, the eversion robot system comprises a soft robotic actuator according to the present invention, thus wherein the soft robotic actuator comprises a flexible sleeve enclosing a passage extending through the sleeve from an open end thereof, wherein the open end is configured for connection to an air outlet of the eversion robot system, and wherein the sleeve further comprises one or more circumferentially wound reinforcement wires extending longitudinally along the sleeve.

The eversion robot system further comprises a pressure chamber provided with an air inlet for connection to an air source, and an air outlet connected to the open end of the sleeve. A rotatable driven reel member is arranged in the pressure chamber and the soft robotic actuator is wound around the reel member.

When the eversion robot system is in use, the soft robotic actuator provides an inflatable eversion chamber enclosed by the sleeve and extends from the open end to a tip portion of the soft robotic actuator. The eversion chamber is in fluid communication with the pressure chamber and the air source is configured to provide an actuator pressure inside the eversion chamber giving rise to eversion of the sleeve at the tip portion. A control member is provided for communicative connection to the air source and the reel member, wherein the control member is configured to control the actuator pressure and a speed of rotation of the reel member for eversion of the soft robotic actuator, i.e. the sleeve, at the tip portion.

### Short description of drawings

The present invention will be discussed in more detail below, with reference to the attached drawings, in which
Figure 1 depicts a three dimensional view of a soft robotic actuator according to an embodiment of the present invention;
Figure 2 depicts a three dimensional view of a soft robotic actuator according to another embodiment of the present invention;
Figure 3 depicts a cross sectional view of an eversion robot system using a soft robotic actuator according to an embodiment of the present invention;
Figure 4 depicts a three-dimensional view of circumferentially wound wire reinforcement of a soft robotic actuator according to an embodiment of the present invention;
Figure 5 depicts a three-dimensional view of a multilayered soft robotic actuator according to an embodiment of the present invention;
Figure 6 depicts an example of elongation of a soft robotic actuator according to an embodiment of the present invention;
Figure 7 depicts an example of cable pulling using a soft robotic actuator according to an embodiment of the present invention; and
Figure 8 depicts an example of tracing a soft robotic actuator according to an embodiment of the present invention.

### Detailed description of embodiments

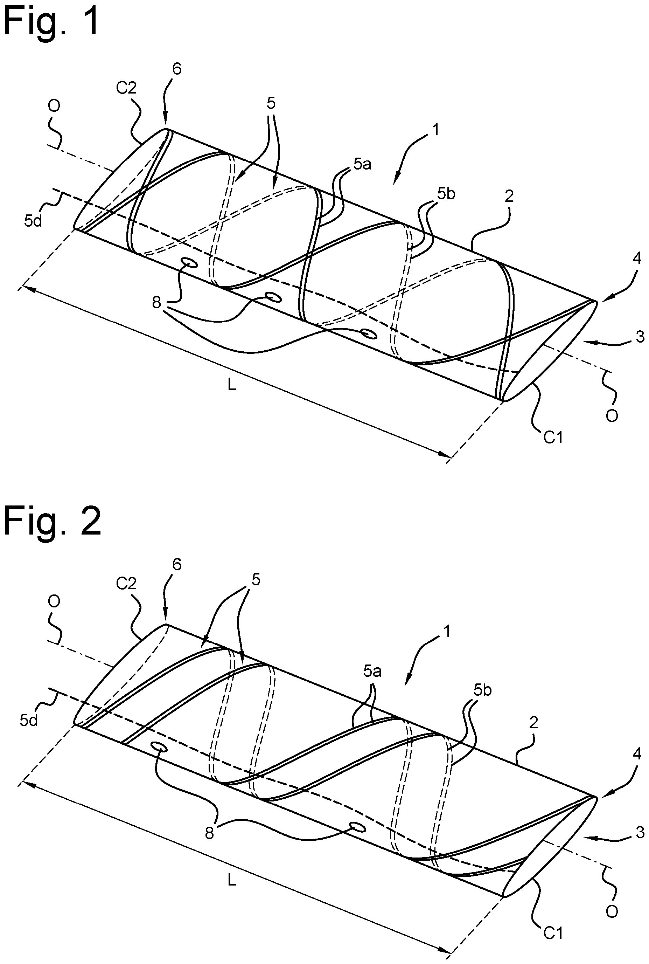

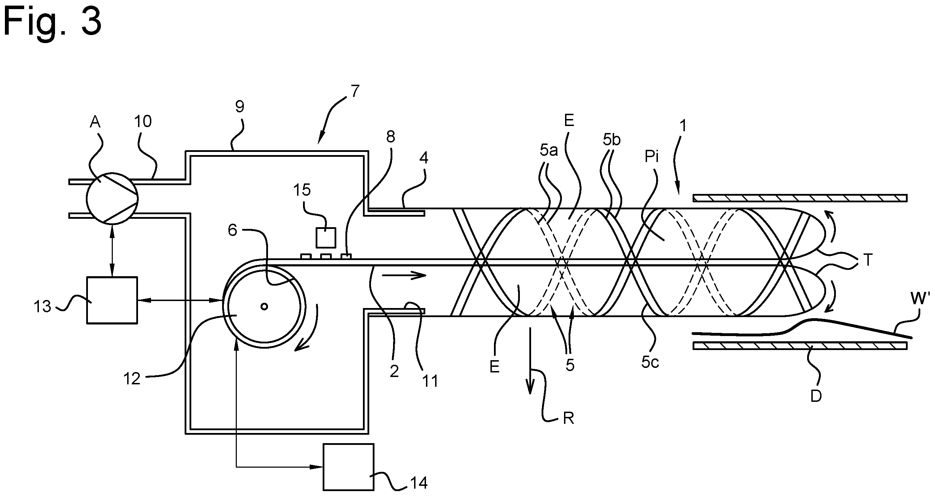

Figure 1 and 2 each depict a three-dimensional view of a soft robotic actuator for use in an eversion robot system, wherein Figure 3 shows an example of an eversion robot system in using the robotic actuator.

As shown, the soft robotic actuator 1 comprises a flexible sleeve 2 enclosing a passage 3 that extends through the sleeve 2 from an open end 4 thereof. In an embodiment, the flexible sleeve 2 may be seen as a flexible tubular foil through which the passage 3 extends. In an embodiment as shown, the sleeve 2 comprises the open end 4 and an opposing open end 6, wherein the open end 4 defines a first end circumference C1 and wherein the opposing open end 6 defines a second end circumference C2. Because the sleeve 2 is flexible and may be viewed as a tubular foil, the first end circumference C1 and the second end circumference C2 need not be circular when the sleeve 2 is compactly wound when sold as a consumable product. The length L of the sleeve 2 can be chosen based on a particular application.

In an embodiment, the sleeve 2 may comprise low density polyethylene, LDPE, to achieve flexibility and resistance against rupture or puncture of the sleeve 2. In a preferred embodiment, the sleeve 2 may comprise linear LDPE, LLDPE, which exhibits higher flexibility and conformability than LDPE, as well as improved pliability and puncture resistance.

In Figure 1 and 2 it is shown that the sleeve 2 of the soft robotic actuator 1 comprises one or more circumferentially wound reinforcement wires 5 that extend longitudinally or lengthwise along the sleeve 2. Note that the depicted axis "O" indicates the longitudinal or lengthwise direction of the sleeve 2.

To gain further understanding on how the soft robotic actuator 1 may be used, in Figure 3 there is shown a schematic embodiment of an eversion robot system 7 according to a further aspect of the present invention. The eversion robot system 7 comprises a pressure chamber 9 provided with an air inlet 10 for connection to an air source A (e.g. compressor) to pressurize the pressure chamber 9, and wherein an air outlet 11 is provided for connection to the open end 4 of the sleeve 2 as mentioned above, and wherein the open end 4 of the sleeve 2 is configured for connection to the air outlet 11. In an exemplary embodiment, the air outlet 11 may have a circular circumference and as such the open end 4 of the flexible sleeve 2, once fitted to the air outlet 11, may be circular in congruent manner.

In the pressure chamber 9 there is arranged a rotatable driven reel member 12 around which the soft robotic actuator 1 is wound. In use, the reel member 12 feeds the sleeve 2 through the air outlet 11. As suggested in Figure 3, the opposing open end 6 of the sleeve 2 may be mounted or affixed to the reel member 12 and from this point the sleeve 2 is wound around the reel member 12. In an exemplary embodiment, the reel member 12 is motorized by means of a controllable electric motor.

In the cross sectional view of Figure 3 it is shown that, when in use, the soft robotic actuator 1 provides an inflatable eversion chamber E, U-shaped as depicted, that is enclosed by the sleeve 2 and extends from the open end 4, or the air outlet 11, to a tip portion T of the soft robotic actuator 1. The eversion chamber E is in fluid communication with the pressure chamber 9, and the air source A is configured to provide an actuator pressure Pi in the eversion chamber E. The actuator pressure Pi maintains the eversion chamber E in an inflated state and as a result imposes a pulling force on a section of the sleeve 2 that is fed through the air outlet 11. By feeding the sleeve 2 through the air outlet 11 allows for continuing eversion of the soft robotic actuator 1, i.e., the sleeve 2, at the tip portion T in radial direction. Here, the term "radial" refers to the depicted direction "R" substantially perpendicular to a lengthwise direction of the soft robotic actuator 1 or sleeve 2.

The eversion robot system 7 further comprises a control member 13 for communicative connection to the air source A and the reel member 12. The control member 13 is configured to control the actuator pressure Pi and a speed of rotation of the reel member 12 for eversion of the soft robotic actuator 1, i.e. the sleeve 2, at the tip portion T. The control member 13 ensures that a correct balance exists between the actuator pressure Pi and a feed rate of the sleeve 2 through the air outlet 11.

Note that the control member 13 may also be configured to move the tip portion T toward the air outlet 11 by retracting the sleeve 2 back into the pressure chamber 9 by the reel member 12, so that the soft robotic actuator 1 may be retracted from a constrained space such as an underground duct. In Figure 3 it is further shown that the one or more circumferential wound reinforcement wires 5 follow the sleeve 2 outward in radial direction during eversion at the tip portion T.

The soft robotic actuator 1 as described provides particular advantages. For example, the one or more circumferentially wound reinforcement wires 5 provide improved radial strength to the sleeve 2 when in use in an eversion robot system 7 as shown in Figure 3. The one or more reinforcement wires 5 allow for higher actuator pressures Pi inside the eversion chamber E whilst avoiding rupture or puncture of the sleeve 2. This is advantageous as an underground duct D as schematically depicted may have local constraints or constrictions caused by existing electric, or communication cables W' extending through the duct D. Although not shown, local collapse and debris inside the duct D may also cause local constrictions. To navigate particular constrictions inside the duct D it may be necessary to substantially increase the actuator pressure Pi and force the tip portion T along these constrictions. To that end the one or more circumferentially wound reinforcement wires 5 increase radial strength of the sleeve 2 to allow for such higher actuator pressures Pi.

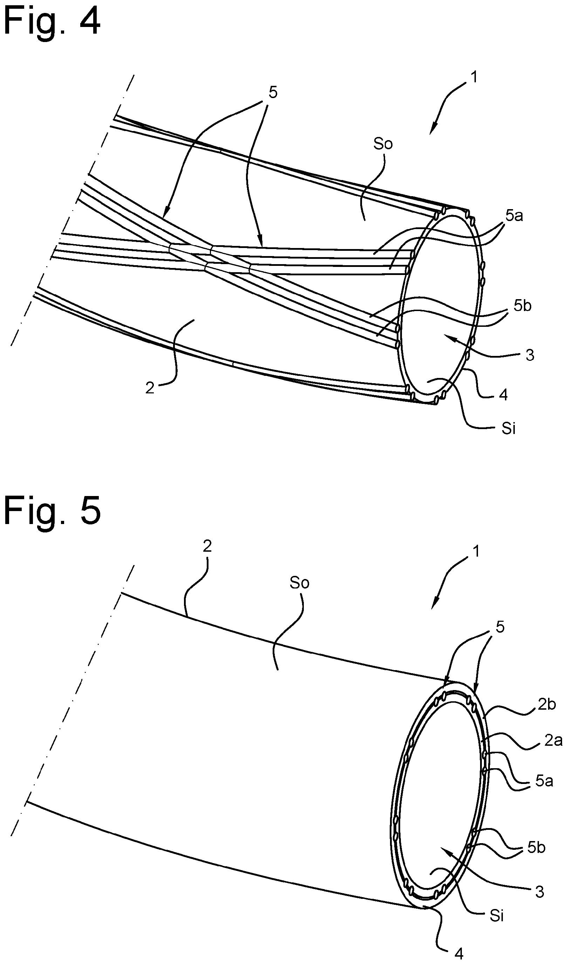

Figures 4 and 5 each depict three-dimensional views of difference embodiments of a soft robotic actuator 1. For example, in Figure 4 an embodiment is shown wherein the one or more reinforcement wires 5 are arranged along an outer surface So of the sleeve 2. This embodiment can be advantageous when the one or more reinforcement wires 5 along the outer surface So should not engage an inner surface of the duct D, existing cables W' and/or debris, thus facing the eversion chamber E. In an alternative embodiment, which is not explicitly shown, the one or more reinforcement wires 5 may be arranged along an inner surface Si of the sleeve 2. This embodiment may be used when e.g. the one or more reinforcement wires 5 should face away from the eversion chamber E and as such provide a smooth inner surface thereof.

In Figure 5 an embodiment is depicted wherein the sleeve 2 comprises an inner layer 2a and an outer layer 2b, and wherein the one or more reinforcement wires 5 are arranged between the inner layer 2a and the outer layer 2b. In this embodiment the one or more reinforcement wires 5 are enclosed by the sleeve 2, thereby providing protection to the reinforcement wires 5. Also, in this embodiment an outer surface So of the sleeve 2 as well as an inner surface Si of the sleeve 2 are smooth to minimize friction.

At this point it is important to note that the one or more reinforcement wires 5 need not be affixed to the sleeve 2. In particular, an embodiment can be envisaged wherein the one or more reinforcement wires 5 are moveably arranged relative to the sleeve 2. When the reinforcement wires 5 are movable relative to the sleeve 2 allows the reinforcement wires 5 to be separated from the sleeve 2 for recycling purposes and/or for leaving the sleeve 2 behind in the duct D whilst removing the one or more reinforcement wires 5 therefrom.

Referring to Figure 1 and 3, an embodiment is shown wherein the sleeve 2 comprises a plurality of circumferentially wound reinforcement wires 5 extending longitudinally along the sleeve 2, and wherein a first reinforcement wire 5a and a second reinforcement wire 5b of the plurality of reinforcement wires 5 are helically wound in opposite directions. In this embodiment the sleeve 2 comprises a plurality of reinforcement wires 5 that are wound in opposing helical manner. Such opposing helical windings of the plurality of reinforcement wires 5 provides particular advantages when the soft robotic actuator 1 is to be used as a tool for installing cables, wires and the like.

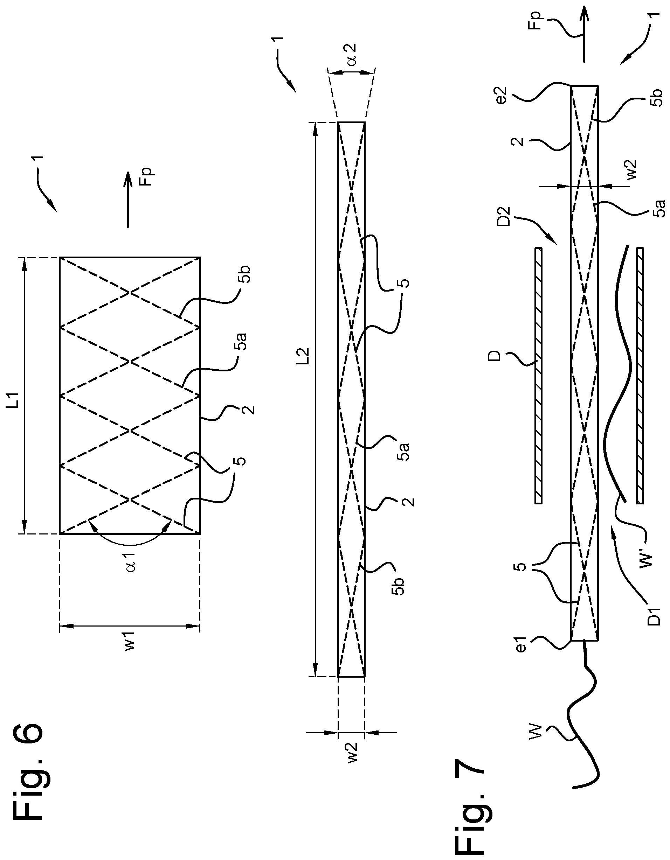

As mentioned earlier, the plurality of reinforcement wires 5 provide radial strength to the soft robotic actuator 1 to allow for higher actuator pressures Pi that may be required when navigating through local constrictions in the duct D. However, the opposing helical windings of the plurality of reinforcement wires 5 are also advantageous when the soft robotic actuator 1 is used as a tool for pulling electronic or communication cables through the duct D. Using the soft robotic actuator 1 as a tool for pulling cables through the duct D can be explained by Figure 6 and 7.

Figure 6 depicts a schematic example of elongation of a soft robotic actuator 1 when subjected to a lengthwise pulling force Fp. Figure 7 depicts a schematic example of cable pulling using a soft robotic actuator 1 when subjected to a lengthwise pulling force Fp.

In particular, as schematically shown in embodiments of Figure 1 and 6, the sleeve 2 comprises a first reinforcement wire 5a and a second reinforcement wire 5b of the plurality of reinforcement wires 5 that are helically wound in opposite directions (i.e., clockwise and counterclockwise). When the soft robotic actuator 1 is subjected to a lengthwise/longitudinal pulling force Fp as indicated by the arrow in Figure 6, then the opposing helically wound first and second reinforcement wires 5a, 5b cause a radially distributed contraction of the sleeve 2 from a first sleeve width w1 to a smaller second sleeve width w2 as the sleeve 2 lengthens from a first length L1 to a longer second length L2. In particular, elongation of the soft robotic actuator 1 forces an initial first angle a1 between the first and second reinforcement wires 5a, 5b to become smaller, decreasing to a smaller second angle α2 when elongation has completed at the elongated second length L2. The transition from the first angle α1 to the second angel α2 causes radial contraction, which is radially distributed by virtue of the first reinforcement wire 5a and the second reinforcement wire 5b being helically wound in opposite directions.

Contraction of the sleeve 2 from the first sleeve width w1 to the smaller second sleeve width w2 facilitates removal of the soft robotic actuator 1 from a duct D as there will be less friction engagement between the sleeve 2 and the duct D and existing cables/wires W' extending therethrough. The plurality of reinforcement wires 5, and in particular the first reinforcement wire 5a and the second reinforcement wire 5b, increase longitudinal or lengthwise strength of the soft robotic actuator 1 such that a lengthwise pulling force Fp can be transmitted reliably for pulling cables.

For example, Figure 7 depicts a schematic example of cable pulling using the soft robotic actuator 1. As shown, the sleeve 2 comprises the plurality of reinforcement wires 5, and in particular the first reinforcement wire 5a and the second reinforcement wire 5b that are helically wound in opposite directions. The soft robotic actuator 1 successfully navigated the constricted duct D from an entrance D1 of the duct D to an exit D2 thereof, wherein the duct D is constrained or constricted by an existing cable/wire W that extends through the duct D.

A new cable/wire W to be installed in the duct D can be affixed to the soft robotic actuator 1 at a first actuator end e1 near the entrance D1. Pulling the soft robotic actuator 1 at a second actuator end e2 near the exit D2 with a lengthwise pulling force Fp results in radial contraction of the sleeve 2 to the second sleeve width w2 by virtue of the opposite helically wound first and second reinforcement wires 5a, 5b. The radial contraction of the soft robotic actuator 1 results in reduced friction engagement between the duct D as well as the existing cable/wire W' extending therethrough. Furthermore, the plurality of reinforcement wires 5 allow for a sufficiently high lengthwise pulling force Fp to be transmitted through the soft robotic actuator 1 such that the new cable/wire W can be pulled through the duct D toward the exit D2 without rupturing or tearing the soft robotic actuator 1.

In an alternative embodiment as shown in Figure 2, the soft robotic actuator 1 may comprises a plurality of circumferentially wound reinforcement wires 5 extending longitudinally along the sleeve 2, and wherein a first reinforcement wire 5a and a second reinforcement wire 5b of the plurality of reinforcement wires 5 are helically wound in identical directions (e.g. both clockwise or counter clockwise). In this embodiment, the plurality of circumferentially wound reinforcement wires 5, in particular the first reinforcement wire 5a and the second reinforcement wire 5b, allow the soft robotic actuator 1 to be used as a pulling cable as explained above once the soft robotic actuator 1 navigated the duct D from the entrance D1 to the exit D2. However, when pulling the soft robotic actuator according to this embodiment, the soft robotic actuator 1 may radially contract and twist around its lengthwise axis in irregular manner when the first reinforcement wire 5a and the second reinforcement wire 5b lengthen due to the lengthwise pulling force Fp. Nonetheless, the plurality of circumferentially wound reinforcement wires 5 still prevent tearing of the soft robotic actuator 1 when a new cable or wire W is pulled through the constricted duct D.

Based on these examples of using the soft robotic actuator 1 as a tool for cable pulling, it is possible to formulate a more general method of installing an electric or communication cable W in a duct D using the soft robotic actuator 1 as a tool. In particular, such a method of installing the cable W in the duct D may comprise the main steps of:
providing the soft robotic actuator 1 comprising the flexible sleeve 2 enclosing the passage 3 extending through the sleeve 2 from the open end 4 thereof, wherein the open end 4 is configured for connection to an air outlet 11 of an eversion robot system 7, and wherein the sleeve 2 comprises the one or more circumferentially wound reinforcement wires 5 extending longitudinally along the sleeve 2;
forcing the soft robotic actuator 1 through the duct D using the eversion robot system 7,
connecting the cable W to the soft robotic actuator 1 at a first actuator end e1 thereof, and
pulling the soft robotic actuator 1 at an opposite second actuator end e2 thereof for pulling the cable W through the duct D.

From these method steps it is clear that the soft robotic actuator 1 can be used as a tool for pulling the cable Wthrough the duct D. In practice, the soft robotic actuator 1 may be cut near the entrance D1 of the duct D, thereby providing the first actuator end e1. Alternatively, the open end 4 of the sleeve 2 may be disconnected from the eversion robot system 7 and act as a first actuator end e1 of the soft robotic actuator 1.

As shown in Figures 1 to 5, an exemplary embodiment is depicted in wherein the first reinforcement wire 5a is a multi-stranded wire and/or the second reinforcement wire 5b is a multi-stranded wire. The multi-stranded wire comprises a plurality of parallel wire cores that are closely arranged. See e.g. the parallel lines shown in Figures 1 and 2 of the first and second reinforcement wires 5a, 5b. The multi-stranded wire provides a plurality of thinner wire cores for the first and/or second reinforcement wires 5a, 5b instead of a single thick wire core, which may impede eversion of soft robotic actuator 1.

For tracing purposes, advantageous embodiments are conceivable. For example, an embodiment may be considered wherein at least one reinforcement wire of the one or more reinforcement wires 5 is electrically conductive. The electric conductivity of the at least one reinforcement wire may be advantageous for receiving or sending wireless signals for tracing purposes, e.g. tracing the soft robotic actuator 1 as it moves through a duct D.

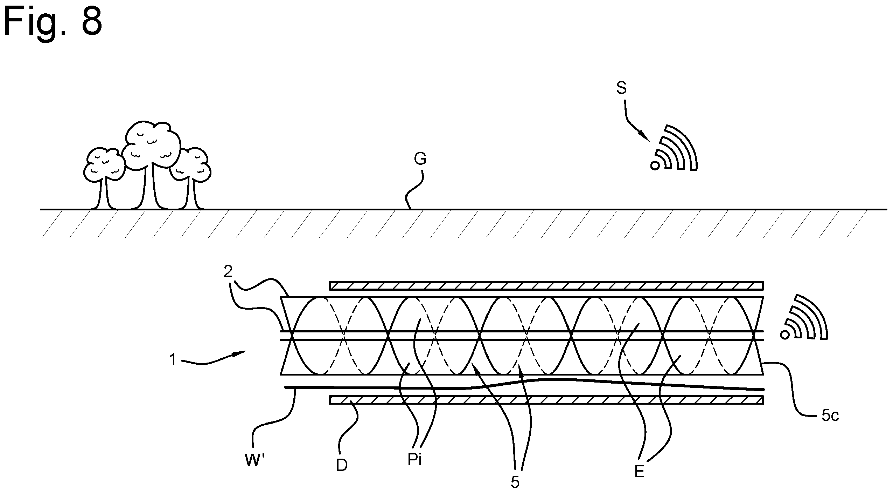

Figure 8 depicts an example wherein the soft robotic actuator 1 can be traced. In particular, Figure 8 shows an application wherein the soft robotic actuator 1 extends through a section of underground ducting D, wherein the sleeve 2 is seen to enclose the inflated eversion chamber E in which an actuator pressure Pi is present to advance the soft robotic actuator 1 through the duct D. At least one reinforcement wire 5c of the one or more reinforcement wires 5 is electrically conductive and can be used as a wireless transmitter and/or receiver for tracing purposes. Above ground level G there may be arranged an external receiver and/or transmitter S, respectively. Locating the soft robotic actuator 1 is achieved by detection of wireless signals received by the at least one reinforcement wire 5c and/or the receiver S.

Further embodiments are conceivable for tracing purposes. For example, in Figure 1 and 2 it is shown that the soft robotic actuator 1 may comprise an auxiliary wire 5d linearly extending along the sleeve 2 and wherein the auxiliary wire 5d is electrically conductive. In this embodiment the auxiliary wire 5d is not circumferentially wound but runs substantially linearly along the sleeve 2 as depicted. This embodiment allows the one or more reinforcement wires 5 to be made from any material desired for optimising radial and lengthwise strength. The electrically conductive auxiliary wire 5d may then be optimized for tracing purposes so that it is not necessary to find a trade-off between strength and traceability.

In particular applications it may be needed to accurately estimate as to where the tip potion T is located inside a constrained space such as an underground duct D. To this end there is provided an embodiment as depicted in Figures 1, 2 and 3, wherein the soft robotic actuator 1, i.e., the sleeve 2, is provided with a plurality of optical markers 8 spaced apart along the sleeve 2 in longitudinal direction thereof. These optical markers 8 may be utilized to optically detect and determine the distance between the eversion robot system 7 and the tip portion T based on a distance between each optical marker 8. For example, optical detection may be performed by the eversion robot system 7 by optically detecting (e.g., counting) how many optical markers 8 passed through the pressure chamber 9 and air outlet 11 to determine a distance between the eversion robot system 7 and the tip portion T.

As mentioned earlier, in a further aspect the present invention relates the eversion robot system 7 of which the main components in Figure 3 have been described.

In case at least one reinforcement wire 5c of the one or more reinforcement wires 5 is electrically conductive, then an embodiment is conceivable wherein the eversion robot system 7 may comprise a transmitter and/or receiver member 14 which is electrically connected to the at least one electrically conductive reinforcement member 5c. In this embodiment the transmitter and/or receiver member 14 allows the at least one electrically conductive reinforcement member 5c to be used for tracing purposes by sending wireless signals to, and/or receiving wireless signals from, a ground based receiver or transmitter S as depicted in Figure 8.

Locating the tip portion T of the soft robotic actuator 1 may be performed by an embodiment of the eversion robot system 7 when the soft robotic actuator 1 is provided with the plurality of optical markers 8 mentioned earlier. In this case the eversion robot system 7 may comprise a detector member 15 configured to detect the plurality of optical markers 8 during movement of the tip portion T. As shown in Figure 3, the detector member 15 may be arranged in the pressure chamber 9 along the sleeve 2 spaced apart therefrom. As the sleeve 2 moves through the pressure chamber 9 toward the tip portion T, the detector member 15 may detect (e.g. count) the optical markers 8 for estimating the distance between the eversion robot system and the tip portion T.

In view of the above, the present invention can now be summarized by the following embodiments:
Embodiment 1. A soft robotic actuator (1) for use in an eversion robot system (7), comprising a flexible sleeve (2) enclosing a passage (3) extending through the sleeve (2) from an open end (4) thereof, wherein the open end (4) is configured for connection to an air outlet (11) of an eversion robot system (7), and wherein the sleeve (2) further comprises one or more circumferentially wound reinforcement wires (5) extending longitudinally along the sleeve (2).
Embodiment 2. The soft robotic actuator (1) according to embodiment 1, wherein the one or more reinforcement wires (5) are arranged along an outer surface (So) or an inner surface (Si) of the sleeve (2).
Embodiment 3. The soft robotic actuator (1) according to embodiment 1, wherein the sleeve (2) comprises an inner layer (2a) and an outer layer (2b), and wherein the one or more reinforcement wires (5) are arranged between the inner layer (2a) and the outer layer (2b).
Embodiment 4. The soft robotic actuator (1) according to any of embodiments 1-3, wherein the one or more reinforcement wires (5) are moveably arranged relative to the sleeve (2).
Embodiment 5. The soft robotic actuator (1) according to any of embodiments 1-4, wherein at least one reinforcement wire (5c) of the one or more reinforcement wires (5) is electrically conductive.
Embodiment 6. The soft robotic actuator (1) according to any of embodiments 1-5, further comprising an auxiliary wire (5c) linearly extending along the sleeve (2), wherein the auxiliary wire (5c) is electrically conductive.
Embodiment 7. The soft robotic actuator (1) according to any of embodiments 1-6, wherein the sleeve (2) comprises a plurality of circumferentially wound reinforcement wires (5) extending longitudinally along the sleeve (2), and wherein a first reinforcement wire (5a) and a second reinforcement wire (5b) of the plurality of reinforcement wires (5) are helically wound in opposite directions.
Embodiment 8. The soft robotic actuator (1) according to any of embodiments 1-6, wherein the sleeve (2) comprises a plurality of circumferentially wound reinforcement wires (5) extending longitudinally along the sleeve (2), and wherein a first reinforcement wire (5a) and a second reinforcement wire (5b) of the plurality of reinforcement wires (5) are helically wound in identical directions.
Embodiment 9. The soft robotic actuator (1) according to embodiment 7 or 8, wherein the first reinforcement wire (5a) is a multi-stranded wire and/or the second reinforcement wire (5b) is a multi-stranded wire.
Embodiment 10. The soft robotic actuator (1) according to any of embodiments 1-9, wherein the sleeve (2) is provided with a plurality of optical markers (8) spaced apart along the sleeve (2) in longitudinal direction thereof.
Embodiment 11. The soft robotic actuator (1) according to any of embodiment 1-10, wherein the sleeve (2) comprises low density polyethylene, LDPE, or linear LDPE, LLDPE.
Embodiment 12. An eversion robot system (7), comprising:
   a soft robotic actuator (1) according to any of embodiments 1-11;
   a pressure chamber (9) provided with an air inlet (10) for connection to an air source (A), and an air outlet (11) connected to the open end (4) of the sleeve (2);
   a rotatable driven reel member (12) arranged in the pressure chamber (9) and wherein the soft robotic actuator (1) is wound around the reel member (12);
   wherein the soft robotic actuator (1) provides an inflatable eversion chamber (E) enclosed by the sleeve (2) and extends from the open end (4) to a tip portion (T) of the soft robotic actuator (1) when in use, and wherein the eversion chamber (E) is in fluid communication with the pressure chamber (9);
   wherein the air source (A) is configured to provide an actuator pressure (Pi) in the eversion chamber (E); and further comprising
   a control member(13) for communicative connection to the air source (A) and the reel member (12), and wherein the control member (13) is configured to control the actuator pressure (Pi) and a speed of rotation of the reel member (12) for eversion of the sleeve (2) at the tip portion (T).
Embodiment 13. The eversion robot system (7) according to embodiment 12, wherein at least one reinforcement wire (5c) of the one or more reinforcement wires (5) is electrically conductive, and wherein the eversion robot system (7) further comprises a transmitter and/or receiver member (14) electrically connected to the least one electrically conductive reinforcement wire (5c).
Embodiment 14. The eversion robot system (7) according to embodiment 12 or 13, wherein the sleeve (2) is provided with a plurality of optical markers (8) spaced apart along the sleeve (2) in longitudinal direction thereof, and wherein the eversion robot system (7) further comprises a detector member (15) configured to detect the plurality of optical markers (8) during movement of the tip portion (T).
Embodiment 15. A method of installing an electric or communication cable (W) in a duct (D), comprising the steps of:
   providing a soft robotic actuator (1) according to any of embodiments 1-11;
   forcing the soft robotic actuator (1) through the duct (D) using an eversion robot system (7), e.g., the eversion robot system (7) according to any of embodiments 12-14;
   connecting the electric or communication cable (W) to the soft robotic actuator (1) at a first actuator end (e1) thereof, and
   pulling the soft robotic actuator (1) at an opposite second actuator end (e2) thereof for moving the cable (W) through the duct (D).
The present invention has been described above with reference to a number of exemplary embodiments as shown in the drawings. Modifications and alternative implementations of some parts or elements are possible, and are included in the scope of protection as defined in the appended claims.

## Claims

1. A soft robotic actuator (1) for use in an eversion robot system (7), comprising a flexible sleeve (2) enclosing a passage (3) extending through the sleeve (2) from an open end (4) thereof, wherein the open end (4) is configured for connection to an air outlet (11) of an eversion robot system (7), and wherein the sleeve (2) further comprises one or more circumferentially wound reinforcement wires (5) extending longitudinally along the sleeve (2).

2. The soft robotic actuator (1) according to claim 1, wherein the one or more reinforcement wires (5) are arranged along an outer surface (So) or an inner surface (Si) of the sleeve (2).

3. The soft robotic actuator (1) according to claim 1, wherein the sleeve (2) comprises an inner layer (2a) and an outer layer (2b), and wherein the one or more reinforcement wires (5) are arranged between the inner layer (2a) and the outer layer (2b).

4. The soft robotic actuator (1) according to any of claims 1-3, wherein the one or more reinforcement wires (5) are moveably arranged relative to the sleeve (2).

5. The soft robotic actuator (1) according to any of claims 1-4, wherein at least one reinforcement wire (5c) of the one or more reinforcement wires (5) is electrically conductive.

6. The soft robotic actuator (1) according to any of claims 1-5, further comprising an auxiliary wire (5c) linearly extending along the sleeve (2), wherein the auxiliary wire (5c) is electrically conductive.

7. The soft robotic actuator (1) according to any of claims 1-6, wherein the sleeve (2) comprises a plurality of circumferentially wound reinforcement wires (5) extending longitudinally along the sleeve (2), and wherein a first reinforcement wire (5a) and a second reinforcement wire (5b) of the plurality of reinforcement wires (5) are helically wound in opposite directions.

8. The soft robotic actuator (1) according to any of claims 1-6, wherein the sleeve (2) comprises a plurality of circumferentially wound reinforcement wires (5) extending longitudinally along the sleeve (2), and wherein a first reinforcement wire (5a) and a second reinforcement wire (5b) of the plurality of reinforcement wires (5) are helically wound in identical directions.

9. The soft robotic actuator (1) according to claim 7 or 8, wherein the first reinforcement wire (5a) is a multi-stranded wire and/or the second reinforcement wire (5b) is a multi-stranded wire.

10. The soft robotic actuator (1) according to any of claims 1-9, wherein the sleeve (2) is provided with a plurality of optical markers (8) spaced apart along the sleeve (2) in longitudinal direction thereof.

11. The soft robotic actuator (1) according to any of claims 1-10, wherein the sleeve (2) comprises low density polyethylene, LDPE, or linear LDPE, LLDPE.

12. An eversion robot system (7), comprising:
a soft robotic actuator (1) according to any of claims 1-11;
a pressure chamber (9) provided with an air inlet (10) for connection to an air source (A), and an air outlet (11) connected to the open end (4) of the sleeve (2);
a rotatable driven reel member (12) arranged in the pressure chamber (9) and wherein the soft robotic actuator (1) is wound around the reel member (12);
wherein the soft robotic actuator (1) provides an inflatable eversion chamber (E) enclosed by the sleeve (2) and extends from the open end (4) to a tip portion (T) of the soft robotic actuator (1) when in use, and wherein the eversion chamber (E) is in fluid communication with the pressure chamber (9);
wherein the air source (A) is configured to provide an actuator pressure (Pi) in the eversion chamber (E); and further comprising
a control member(13) for communicative connection to the air source (A) and the reel member (12), and wherein the control member (13) is configured to control the actuator pressure (Pi) and a speed of rotation of the reel member (12) for eversion of the sleeve (2) at the tip portion (T).

13. The eversion robot system (7) according to claim 12, wherein at least one reinforcement wire (5c) of the one or more reinforcement wires (5) is electrically conductive, and wherein the eversion robot system (7) further comprises a transmitter and/or receiver member (14) electrically connected to the least one electrically conductive reinforcement wire (5c).

14. The eversion robot system (7) according to claim 12 or 13, wherein the sleeve (2) is provided with a plurality of optical markers (8) spaced apart along the sleeve (2) in longitudinal direction thereof, and wherein the eversion robot system (7) further comprises a detector member (15) configured to detect the plurality of optical markers (8) during movement of the tip portion (T).

15. A method of installing an electric or communication cable (W) in a duct (D), comprising the steps of:
providing a soft robotic actuator (1) according to any of claims 1-11;
forcing the soft robotic actuator (1) through the duct (D) using an eversion robot system (7);
connecting the electric or communication cable (W) to the soft robotic actuator (1) at a first actuator end (e1) thereof, and
pulling the soft robotic actuator (1) at an opposite second actuator end (e2) thereof for moving the cable (W) through the duct (D).
